# EUROPEAN PATENT APPLICATION

(11) **EP 2 320 417 A1**
(43) Date of publication of application: **11.05.2011**
(21) Application number: 08791450.3
(22) Date of filing: 23.07.2008
(51) Int. Cl.: G11B 5/09

(54) **RECORDING CONTROL DEVICE, RECORDING CONTROL METHOD, AND RECORDING CONTROL PROGRAM**

(71) Applicant: Fujitsu Limited, Kawasaki-shi, Kanagawa 211-8588 (JP)
(72) Inventor: MASUKO, Toshifumi, Kawasaki-shi Kanagawa 211-8588 (JP)
(74) Representative: Stebbing, Timothy Charles
(86) International application number: PCT/JP2008/063193
(87) International publication number: WO 2010/010616

(57) **Abstract**

A recording control device includes a recording unit, and generates a conversion rule by determining the number of divisions into which the total number of sectors is to be divided, an area to which data is to be moved, and a start position of a sector, based on a key received from a connected information processing device. When a data read or write request is received from the information processing device, the recording control device converts the request into an instruction to convert a sector position assigned by a received request into a virtual sector position, executes the converted instruction, and discards the generated conversion rule after executing the instruction, based on a generated conversion rule.

## Description

### TECHNICAL FIELD

The present invention relates to a recording control device, a recording control method, and a recording control program.

### BACKGROUND ART

Generally, a storage device as a device having a semiconductor, a magnetic medium and the like and storing information is mainly divided into a main storage device and an auxiliary storage device. The main storage device exchanges data with an arithmetic device, and is required to have a fast processing speed. Therefore, a volatile semiconductor is often used for the main storage device, and thus the cost of the device is also high. On the other hand, the auxiliary storage device permanently stores information and stores a large amount of information, unlike the main storage device, and thus nonvolatile semiconductors are used therefor.

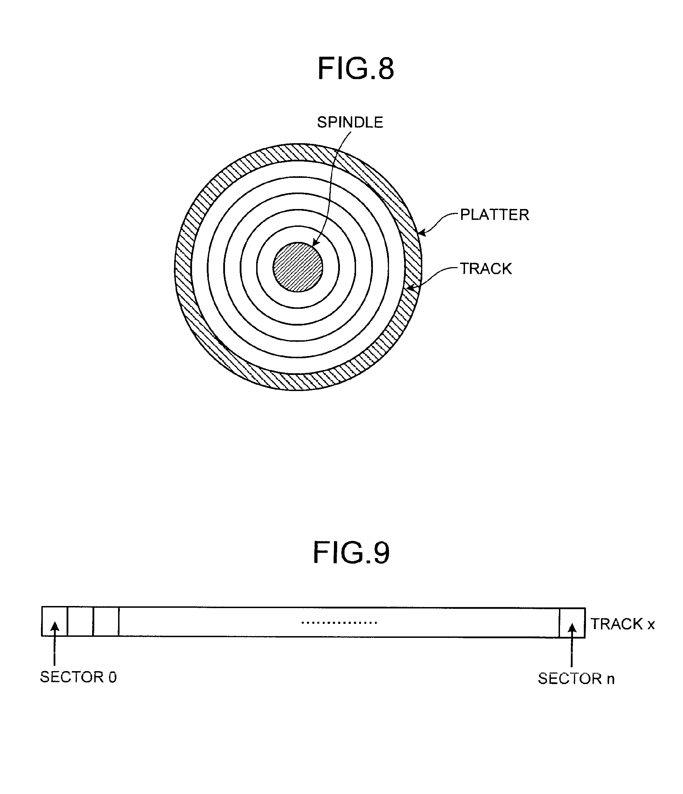

On a hard disk, which is one of such auxiliary storage devices, one or plural disks (magnetic disks, platters) of a glass or a metal coated with a magnetic substance are arranged concentrically on a spindle (a motor) (see FIG. 8). FIG. 8 is an explanatory diagram of a structure of a platter.

On the hard disk, a magnetic head moved by a swing arm detects and changes a magnetization pattern and stores data. Data to be stored is managed by a sector as a data area obtained by partitioning a concentrically-extended track in a predetermined unit on the magnetic disk. The sector as the data area is assigned at the time of reading or writing data (see FIG. 9). FIG. 9 is an explanatory diagram of a structure of a track.

Performance of data reading from or data writing into the hard disk is influenced by a seek time as a time taken for a position of the magnetic head to reach the sector based on a movement of the magnetic head between tracks and a rotation of the magnetic disk. Data to be stored in the hard disk is sequentially stored in continuous sectors. When data cannot be sequentially stored in continuous sectors, data is continuously stored from near free sectors. To continuously store data from near free sectors is called fragmentation. Data continuity is also guaranteed in this case.

The speed of a data read or write request by an information processing device connected to the hard disk is greatly different from the speed of reading from or writing into an actual sector. This is because of the presence of a physical work such as a change of a magnetic pattern at the time of reading from or writing into the actual sector. For example, the speed of the data read or write request is in the µs (microsecond) order, and the speed of reading from or writing into the actual sector is in the ms (millisecond) order.

Recently, there is a technique of collectively performing plural read or write requests by reading from or writing into an actual sector without waiting for completion of this process, by having a buffer memory in a hard disk. There is also a technique called NCQ (Native Command Queuing) for replacing an order of the read or write request in the hard disk such that a magnetic head does not move so much (minimizes a movement) from positions of a platter, a track, and a sector. Various techniques of a hard disk to read and write data are also known.

Patent Document 1: Japanese Patent Laid-open Publication No. 2004-355707
Patent Document 2: Japanese Laid-open Patent Publication No. 11-224165
Patent Document 3: Japanese Laid-open Patent Publication No. 2002-49511
Patent Document 4: Japanese Laid-open Patent Publication No. 2001-167518

### DISCLOSURE OF INVENTION

### PROBLEM TO BE SOLVED BY THE INVENTION

However, the conventional techniques described above have a problem in that the security of data to be stored is low.

Specifically, according to the conventional techniques, data is easily read from the hard disk because data is not protected from an attack by a third person. For example, because a data storage location is easily known, data encoded in the hard disk has a possibility of being decoded. That is, in the hard disk and various storage devices different from this hard disk, there is no security measure concerning data recording so far as an access to these devices is not blocked.

The present invention has been achieved to solve the problems of the conventional technique mentioned above, and an object of the present invention is to provide a recording control device, a recording control method, and a recording control program capable of increasing the strength of the security of data to be stored.

### MEANS FOR SOLVING PROBLEM

To solve the problems and achieve the object, a recording control device requires a conversion-rule generating unit that generates a rule of converting a sector position of data to be read from a recording unit or written into the recording unit, based on a predetermined value received from a connected information processing device; an instruction converting unit that converts a read request or a write request into an instruction of reading from or writing to a sector position of the recording unit based on the conversion rule generated by the conversion-rule generating unit, when a read request or a write request is received from the information processing device; and a recording-unit control unit that reads data from or writes data to the recording unit by executing the instruction converted by the instruction converting unit.

### EFFECT OF THE INVENTION

According to the recording control device disclosed in the present application, it is possible to increase the strength of the security of data to be stored.

### BRIEF DESCRIPTION OF DRAWINGS

FIG. 1 is a configuration example of a recording control device according to a first embodiment.
FIG. 2 is an example of data transmitted from an information processing device.
FIG. 3-1 is an example of data before a conversion.
FIG. 3-2 is an example of data after a conversion.
FIG. 4-1 is an example of data stored in a recording unit at the time of a data write request from the information processing device.
FIG. 4-2 is an example of data stored in the recording unit when the number of divisions is three.
FIG. 4-3 is an example of data stored in the recording unit when the number of an area movement is 2 and when a start position is 10.
FIG. 4-4 is an example of data stored in the recording unit when a difference (the number of shift) is 3.
FIG. 5-1 depicts sector positions before executing a converted instruction.
FIG. 5-2 depicts sector positions after executing an instruction to move a sector by 3 and move a platter by 1.
FIG. 6 is a flowchart for explaining a flow of a process performed by the recording control device according to the first embodiment.
FIG. 7 depicts a computer that executes a recording control program.
FIG. 8 is an explanatory diagram of a structure of a platter.
FIG. 9 is an explanatory diagram of a structure of a track.

### EXPLANATIONS OF LETTERS OR NUMERALS

- 1: Information processing device

- 2: Device driver
- 10: Recording control device
- 20: Buffer memory
- 21: Working memory
- 22: Recording unit
- 30: Controller
- 31: Command transmitting/receiving unit
- 32: Conversion-rule generating unit
- 33: Command converting unit
- 34: NCQ processing unit
- 35: Recording-unit control unit

### BEST MODE(S) FOR CARRYING OUT THE INVENTION

Exemplary embodiments of a recording control device, a recording control method, and a recording control program according to the present invention will be explained below in detail with reference to the accompanying drawings.

### First Embodiment

### Outline of recording control device

An outline of a recording control device according to a first embodiment is explained first. The recording control device disclosed in the present application includes a recording unit for recording data. When a data read or write request is received from a connected information processing device, the recording control device reads data stored in the recording unit or writes data into the recording unit. The recording control device can be arranged at the inside of the information processing device or at the outside of the information processing device. The following explanations are based on an assumption that the recording control device is arranged at the inside of the information processing device.

In the configuration described above, the recording control device generates a rule of converting a sector position of data to be read from the recording unit or to be written into the recording unit based on a predetermined value received from the connected information processing device. When the read or write request is received from the information processing device, the recording control device converts the request into a read or write instruction to a sector position of the recording unit based on a generated conversion rule. Next, the recording control device executes the converted read or write instruction, and reads continuous data from the recording unit or writes continuous data into the recording unit.

Specifically, the recording control device includes the recording unit, and determines the number of areas into which the total number of sectors is to be divided (hereinafter, a divided area is referred to as "area"), based on a key as a predetermined value received from the connected information processing device (such as a host computer of the recording control device). Next, the recording control device determines an area to which data is to be moved based on the key, and determines a start position of a sector. In short, the recording control device generates a conversion rule of converting a sector position of read or write data recognized by the information processing device.

Thereafter, when the read or write request is received from the information processing device, the recording control device converts a sector position assigned by a received request into a virtual sector position and converts the request into an instruction to the virtual sector position, based on a generated conversion rule. The recording control device executes the converted read or write instruction, and reads a series of continuous data from the recording unit or writes a series of continuous data into the recording unit. After executing the read or write instruction, the recording control device discards the generated conversion rule.

As described above, the recording control device can record data to be stored in the recording unit, by changing the sector position into the virtual sector position different from that recognized at an information processing device side. As a result, the strength of the security of data to be stored can be increased.

### Configuration of recording control device

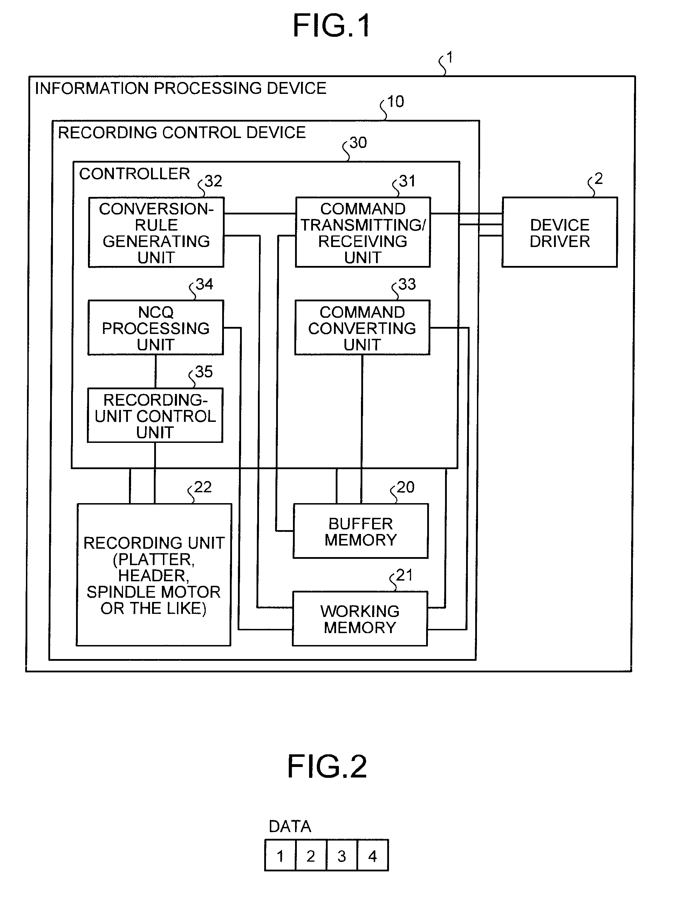

A configuration of the recording control device according to the first embodiment is explained next with reference to FIG. 1. FIG. 1 is a configuration example of the recording control device according to the first embodiment.

As illustrated in FIG. 1, a recording control device 10 is arranged in an information processing device 1 having a device driver 2, and includes a buffer memory 20, a working memory 21, a recording unit 22, and a controller 30.

The information processing device 1 generates a predetermined value, and notifies this value to the recording control device 10. For example, the information processing device 1 generates a 128-bit key from low 80 bits of a serial ID (96 bits) of a CPU as a constituent element in the information processing device 1 and from MAC address 48 bits of a LAN card, and notifies the 128-bit key to the recording control device 10. The device driver 2 controls a hard disk (for example, the recording control device 10) of the information processing device 1.

The buffer memory 20 is a volatile memory that temporarily stores information processed by the controller 30, for example. The working memory 21 is a volatile memory that records a conversion rule generated by a command converting unit 33 described later and is used as a working area to convert a command based on the conversion rule, for example. The recording unit 22 is a nonvolatile magnetic medium that includes a platter, a header, a spindle motor or the like, and records various kinds of information (data).

The controller 30 includes an internal memory to store control programs, programs having various process procedures specified therein, and required data (such as a sector position in the recording unit 22), and particularly includes a command transmitting/receiving unit 31, a conversion-rule generating unit 32, the command converting unit 33, an NCQ processing unit 34, and a recording-unit control unit 35.

The command transmitting/receiving unit 31 controls a transmission and a reception of a command to and from the device driver 2. Specifically, the command transmitting/receiving unit 31 receives a 128-bit key notified from the device driver 2, and notifies the key to the conversion-rule generating unit 32 described later.
For example, the command transmitting/receiving unit 31 receives a request for data reading or writing by the information processing device 1.

The conversion-rule generating unit 32 generates a rule of converting a sector position of data to be read from or written into the recording unit, based on a predetermined value received from the connected information processing device. Taking a specific example, the conversion-rule generating unit 32 determines the number of areas into which the total number of sectors is divided by using zeroth bit to fourth bit (5 bits) among keys notified by the command transmitting/receiving unit 31. The divided area is referred to as "area".

For example, areas are from an area 0 to an area 15 by assuming that the total number of sectors is divided into 16 when a content of zeroth bit to fourth bit is 16. That is, when a movement amount of an area and a sector position described later is zero, data of a sector 0 is stored in a header sector of the area 0, data of a sector 1 is stored in a header sector of an area 1, data of a sector 15 is stored in a header sector of the area 15, and data of a sector 16 is stored in a header sector +1 of the area 0.

Logically, unlimited division of converting a sector position in one-sector unit has the greatest strength of security; however, its process becomes slow because data is written in one-sector unit. Therefore, it is desirable to limit the division. In the present embodiment, 32 divisions as maximum are assumed. When there is no division, the number of areas becomes the same as the total number of sectors.

The conversion-rule generating unit 32 determines an area to which data is to be moved by using 16th bit to 20th bit (5 bits) among notified keys. For example, when a content of 16th bit to 20th bit is 5, the conversion-rule generating unit 32 stores data of the sector 0 in an area 5, stores data of the sector 1 in an area 6, and stores data of the sector 15 in an area 4.

When a content of 16th bit to 20th bit is 14, for example, the conversion-rule generating unit 32 stores data of the sector 0 in an area 14, stores data of the sector 1 in the area 15, and stores data of the sector 15 in an area 13.

The conversion-rule generating unit 32 determines a sector start position in an area by using 32nd bit to 63rd bit (32 bits) and 64th bit to 71st bit (8 bits) among notified keys. For example, when a content of 32nd bit to 63rd bit is 10000, the conversion-rule generating unit 32 sets a sector 10000 as a start position of an area, and stores data sequentially in a sector 10001, in a sector 10002, in the sector 0, in the sector 1, in a sector 2, and in a sector 9999.

When a content of 64th bit to 71st bit is 300, for example, the conversion-rule generating unit 32 sets a sector 10300 as an area start position of the area 1, and sets a sector 10600 as an area start position of an area 2.

Thereafter, the conversion-rule generating unit 32 acquires data conversion data from 96th bit to 127th bit (32 bits) of a notified key. The conversion-rule generating unit 32 generates a conversion rule, stores the conversion rule in the working memory 21, and discards a used key.

When the read or write request is received from the information processing device 1, the command converting unit 33 converts the request into a read or write instruction to a sector position of the recording unit based on the generated conversion rule.

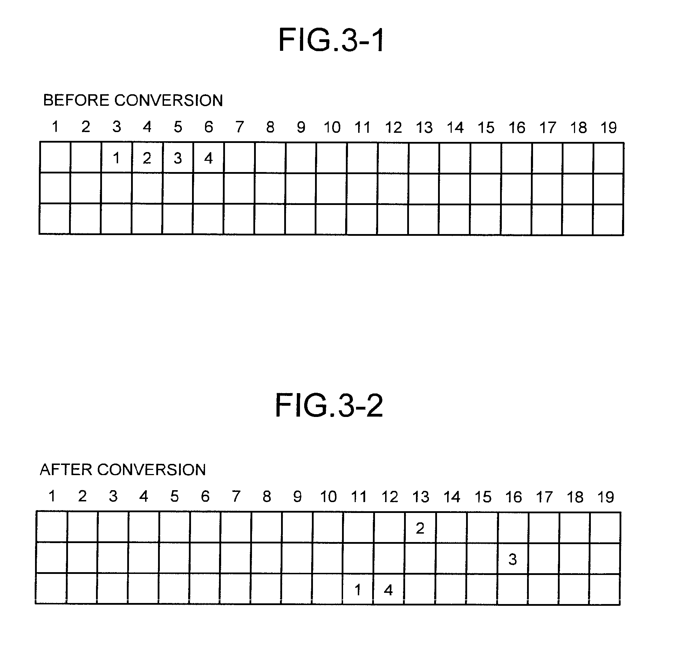

There is explained below a case that a request (see FIG. 3-1) for writing data (see FIG. 2) of four sectors from an sector 3 is received from the information processing device 1, where a key of a conversion rule generated by the conversion-rule generating unit 32 is that zeroth bit to fourth bit are 3 (the number of divisions), that 16th bit to 20th bit are 2 (an area to which data is moved), that 32nd bit to 63rd bit are 10 (a virtual sector start position), and that 64th bit to 71st bit are 3 (the number of shift). FIG. 2 is an example of data transmitted from the information processing device 1, and FIG. 3-1 is an example of data before a conversion.

For example, because the sector 0 starts from a sector 10 of the area 2 following the conversion rule, the command converting unit 33 converts the request into an instruction to write data of a first sector into a sector 11 of the area 2, write data of a second sector into a sector 13 of the area 0, write data of a third sector into the sector 16 of the area 1, and write data of a fourth sector into a sector 12 of the area 2 (see FIG. 3-2). FIG. 3-2 is an example of data after a conversion.

In short, the command converting unit 33 converts the request into an instruction to write data of a first sector into the sector 11 of the area 2, and write data of a fourth sector into the sector 12 of the area 2 (for example, an instruction 1). The command converting unit 33 also converts the request into an instruction to write data of a second sector into the sector 13 of the area 0, (for example, an instruction 2). The command converting unit 33 also converts the request into an instruction to write data of a third sector into the sector 16 of the area 1, (for example, an instruction 3).

The command converting unit 33 converts a content of data by using data conversion data acquired by the conversion-rule generating unit 32, and converts a content of data by performing an exclusive OR calculation with a key. When the number of bits of data is smaller than 32 bits, a conversion is performed by matching data of a short length. Thereafter, the command converting unit 33 stores a converted instruction into the working memory 21.

The NCQ processing unit 34 executes a command so that a seek time becomes minimize. Taking a specific example, the NCQ processing unit 34 rearranges instructions converted by the command converting unit 33 in an order from the nearest to the position of a header. For example, when the position of the header is in the area 1, the NCQ processing unit 34 rearranges an order to execute the instruction 3 first, the instruction 1 next, and the instruction 2 next.

The recording-unit control unit 35 executes the converted read or write instruction, and reads continuous data from the recording unit or writes continuous data into the recording unit. Taking a specific example, the recording-unit control unit 35 executes the write instruction in the order of the instruction 3, the instruction 1, and the instruction 2 as an instruction order rearranged by the NCQ processing unit 34, and writes data into the recording unit 22. When a series of continuous data is not present after executing the write instruction in the order of the instruction 3, the instruction 1, and the instruction 2, the recording-unit control unit 35 discards the generated conversion rule.

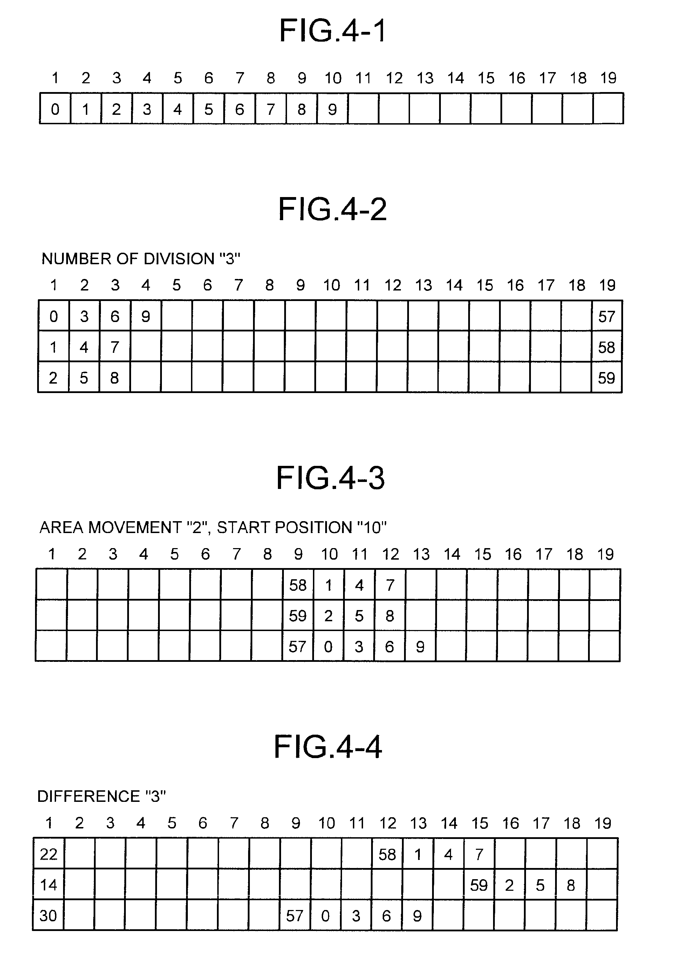

FIGS. 4-1 and 4-2 depict a change between a position of recording by the recording unit 22 at the time of generating the conversion-rule and a position at the time of executing the instruction. FIG. 4-1 is an example of data stored in the recording unit 22 at the time of a data write request from the information processing device 1. FIG. 4-2 is an example of data stored in the recording unit 22 when the number of divisions is three. FIG. 4-3 is an example of data stored in the recording unit 22 when the number of an area movement is 2 and when a start position is 10. FIG. 4-4 is an example of data stored in the recording unit 22 when a difference (the number of shift)
is 3. In practice, data is not recorded at each time of generating the conversion rule and executing the instruction, but is recorded when a final instruction is executed.

When a data read request is received from the information processing device 1, the recording control device 10 generates the conversion rule from the same key as the above key (the key at the data write time), converts the read instruction, and executes the converted instruction. The recording control device 10 resets a virtual sector position stored in the recording unit 22 at a sector position assigned by the information processing device 1, and notifies the assigned sector position to the information processing device 1. When a series of continuous data is not present after executing the read instruction, the recording control device 10 discards the generated conversion rule.

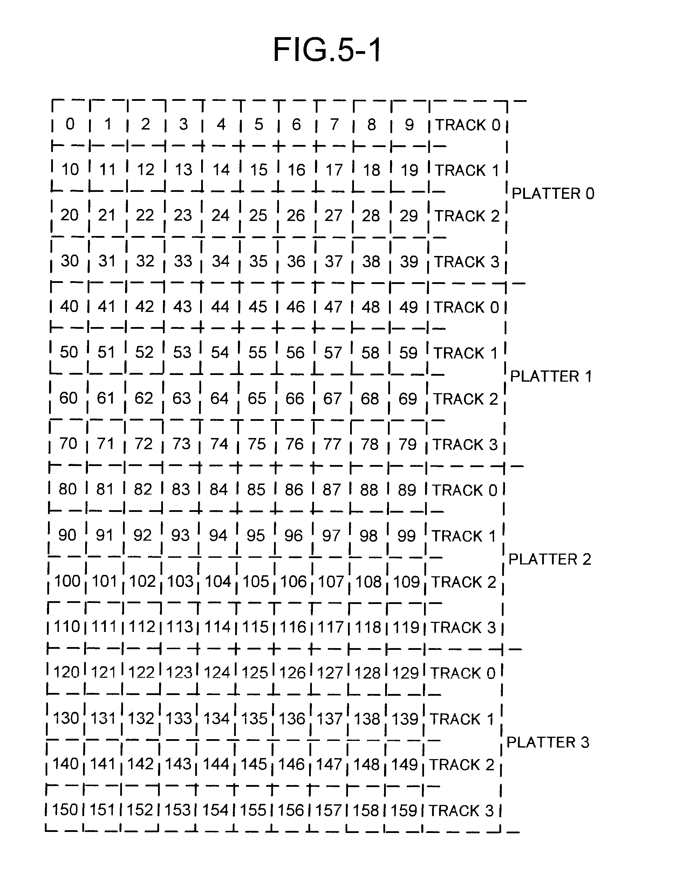

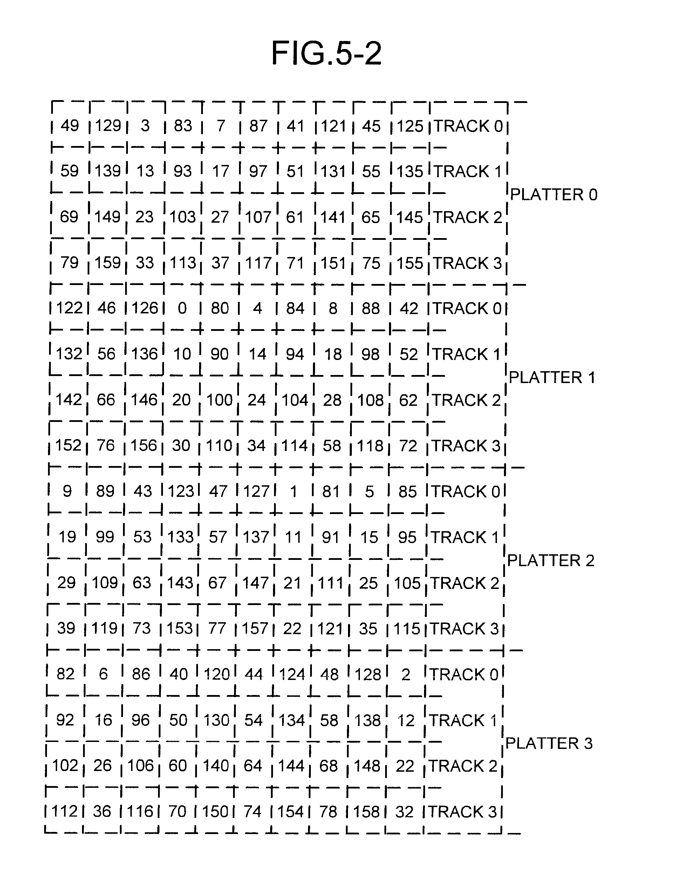

When data sector positions are as illustrated in FIG. 5-1 before executing the converted instruction, for example, the recording control device 10 converts the data sector positions to those illustrated in FIG. 5-2 after executing the converted instruction (for example, shift a sector by 3, and shift a platter by 1).

However, according to the conversion rule, the total number of sectors is different depending on a capacity of a platter and the number of platters. Therefore, a format of an algorithm of replacing data and key data is changed to match the total number of sectors. In short, sector positions of data to be stored are superimposed when data are stored by applying an instruction converted into sector positions illustrated in FIG. 5-2. Therefore, data are sequentially stored to avoid a superimposition by changing a format of an algorithm and key data. FIG. 5-1 depicts sector positions before executing the converted instruction, and FIG. 5-2 depicts sector positions after executing the instruction to move a sector by 3 and move a platter by 1.

### Flow of process performed by recording control device

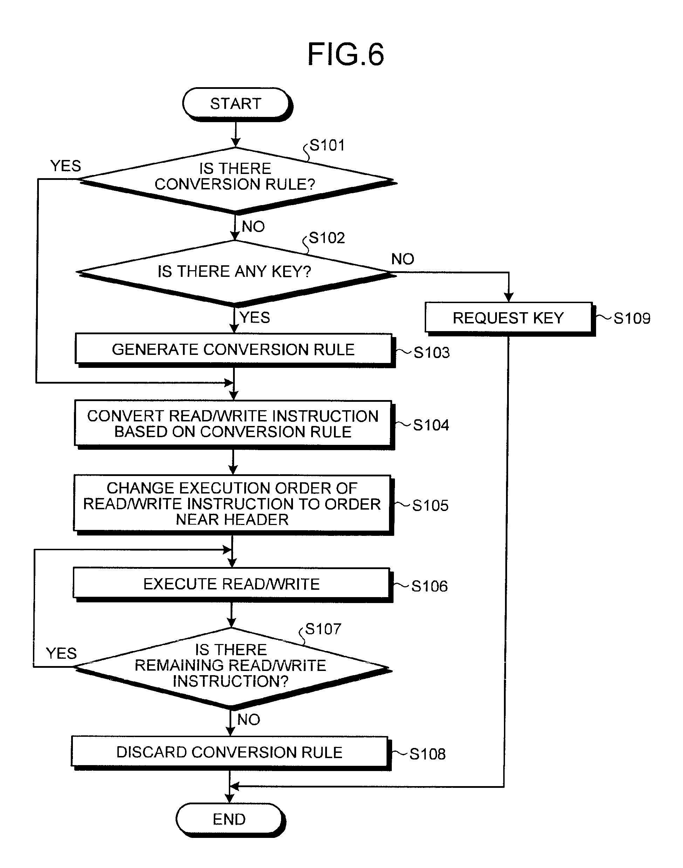

A flow of a process performed by the recording control device 10 according to the first embodiment is explained next with reference to FIG. 6. FIG. 6 is a flowchart for explaining the flow of the process performed by the recording control device 10 according to the first embodiment.

As illustrated in FIG. 6, when there is no conversion rule (NO at Step S101), the recording control device 10 determines whether there is a key received from the information processing device 1. When there is a key received (YES at Step S102), the recording control device 10 generates a conversion rule based on the key (Step S103).

The recording control device 10 converts a write or read instruction based on the generated conversion rule (Step S104). Thereafter, the recording control device 10 changes an execution order of a converted write or read instruction to an order near a header (Step S105). The recording control device 10 executes a changed write or read instruction (Step S106), and determines whether all write or read instructions have been executed (Step S107).

When all write or read instructions have been executed (NO at Step S107), the recording control device 10 discards the generated conversion rule and ends the process (Step S108). When there is a conversion rule (YES at Step S101), the recording control device 10 converts an instruction to a write or read instruction based on the conversion rule (Step S104). When there is no key (NO at Step S102), the recording control device 10 requests the information processing device 1 for a key (Step S109).

### Effect of First Embodiment

As described above, the recording control device 10 changes sector positions of data to be stored, and writes changed positions without writing positions of the data in a hard disk in order from a determined sector position. Therefore, the strength of the security of data to be stored can be increased.

For example, the recording control device 10 includes the recording unit 22, and generates a conversion rule by determining the number of areas into which the total number of sectors is to be divided, determining an area to which data is to be moved, and determining a start position of a sector, based on a key received from the connected information processing device 1. When a read or write request is received from the information processing device 1, the recording control device 10 converts a sector position assigned by a received request into a virtual sector position and converts the request into a write or read instruction to the virtual sector position, based on the generated conversion rule. The recording control device 10 executes a converted write or read instruction, and reads a series of continuous data from the recording unit 22 or writes a series of continuous data into the recording unit 22. Thereafter, after executing the read or write instruction, the recording control device 10 discards the generated conversion rule. As a result, the recording control device 10 can increase the strength of the security of data to be stored.

The recording control device 10 does not internally hold a key to generate the conversion rule to avoid the key from being analyzed when a hard disk is analyzed. Because data read out when a key is different becomes an enumeration of data having no rule, restoration of data can be prevented even when a hard disk is analyzed.

In the recording control device 10, a data copy occurs at the time of converting a write or read instruction from the information processing device 1. Therefore, by performing an exclusive OR calculation with a key at the copy time, a content of data is also converted. Consequently, the strength of the security of data to be stored can be further increased.

### Second Embodiment

While the first embodiment has been explained above, the disclosed recording control device, recording control method, and recording control program can be also implemented in various different modes other than the above embodiment. Different embodiments are explained by dividing them into (1) a timing of discarding the conversion rule, (2) a system configuration, and (3) programs.

### (1) Timing of discarding conversion rule

Although a case of discarding the generated conversion rule after executing the write or read instruction has been explained in the first embodiment, the disclosed recording control device, recording control method and recording control program are not limited thereto. The generated conversion rule can be discarded at the time of stopping a hard disk or at the time of turning off a power supply of the hard disk. Setting information of a discard timing of the conversion rule can be held at a hard disk side or at a device drive side.

### (2) System configuration

Information including process procedures, control procedures, specific names, and various kinds of data and parameters mentioned in the above descriptions and drawings (such as a format of an algorithm and key data to which a conversion rule generated by the conversion-rule generating unit 32 illustrated in FIG. 1) can be arbitrarily changed unless otherwise specified.

Respective constituent elements of each device illustrated in the drawings are functionally conceptual, and physically the same configuration as illustrated in the drawings is not always necessary. That is, a specific mode of distribution and integration of respective devices is not limited to those illustrated in the drawings. For example, the NCQ processing unit 34 and the recording-unit control unit 35 can be integrated into a recording-unit control unit that performs a write or read instruction by rearranging instructions in an order from a fastest execution speed. In this way, the whole or a part of these units can be functionally or physically distributed or integrated in an arbitrary unit according to various kinds of load and the status of use. Furthermore, all or an arbitrary part of each processing function performed by respective devices can be realized by a CPU, or by a program analyzed and executed in the CPU, or can be realized as hardware by a wired logic.

In the first embodiment, although the recording control device 10 has been explained to be included in the information processing device 1, the recording control device 10 is not necessary included in the information processing device 1, and it suffices that the recording control device 10 is configured to be able to receive a key and data from the connected information processing device 1.

Although a case of generating a key by using constituent elements of the information processing device 1 has been explained in the first embodiment, the key is not required to use these constituent elements, and can be an input one.

In the first embodiment, although a case of generating the conversion rule based on a key received from the information processing device 1 has been explained, the disclosed recording control device, recording control method, and recording control program are not limited thereto. It is also possible to configure that the conversion rule is held in advance and the write or read instruction is executed based on the held conversion rule.

### (3) Programs

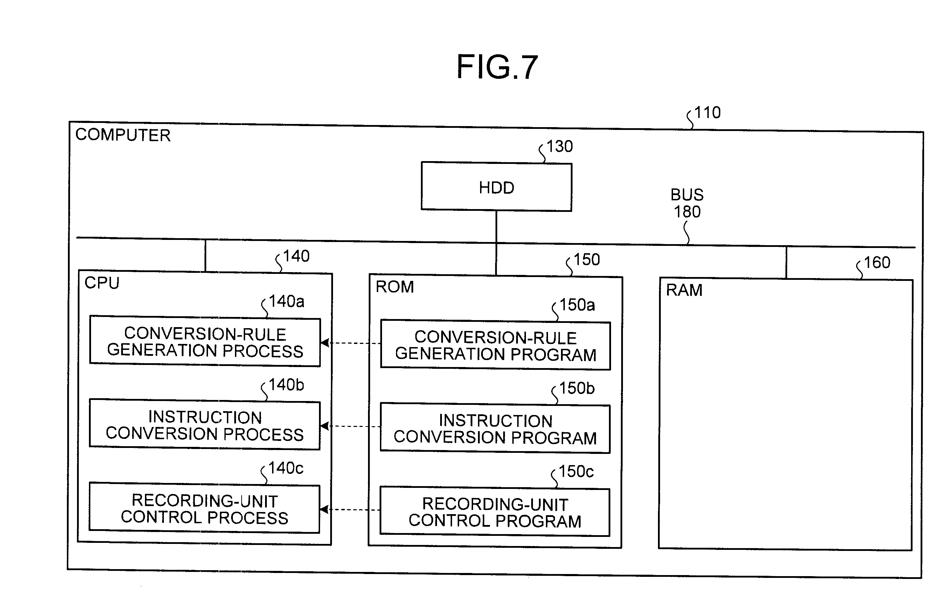

Although a case of achieving various processes by a hardware logic has been explained in the above embodiment, the disclosed recording control device, recording control method and recording control program are not limited thereto. Various processes can be achieved by executing a program prepared in advance by a computer. An example of a computer that executes a recording control program having functions similar to those of the recording control device 10 explained in the above embodiment is explained below with reference to FIG. 7. FIG. 7 depicts a computer that executes the recording control program.

As illustrated in FIG. 7, a computer 110 as a recording control device includes an HDD 130, a CPU 140, a ROM 150, and a RAM 160 connected by a bus 180.

The ROM 150 stores therein in advance recording control programs achieving functions similar to those of the recording control device 10 explained in the first embodiment. That is, the ROM 150 stores in advance a conversion-rule generation program 150a, an instruction conversion program 150b, and a recording-unit control program 150c as illustrated in FIG. 7. These programs 150a to 150c can be suitably integrated or distributed in a similar manner to that applied to the constituent elements of the recording control device 10 illustrated in FIG. 1.

When the CPU 140 executes the programs 150a to 150c by reading them from the ROM 150, the programs 150a to 150c function as a conversion-rule generation process 140a, an instruction conversion process 140b, and a recording-unit control process 140c as illustrated in FIG. 7. The processes 140a to 140c correspond to the conversion-rule generating unit 31, the command converting unit 33, and the recording-unit control unit 35 illustrated in FIG. 1.

The CPU 140 executes the recording control program based on data recorded in the RAM 160.

Each of the programs 150a to 150c described above does not need to be stored initially in the ROM 150. For example, it is possible to configure that these programs are stored in "portable physical medium" such as a flexible disk (FD), a CD-ROM, a DVD disk, a magneto-optical disk, and an IC card to be inserted into the computer 110, "fixed physical medium" such as an HDD provided inside or outside of the computer 110, or "other computers (or servers)" connected to the computer 110 via a public communication line, the Internet, a LAN, or a WAN, and the computer 110 reads and executes these programs from these medium.

## Claims

1. A recording control device comprising:
a conversion-rule generating unit that generates a rule of converting a sector position of data to be read from a recording unit or written into the recording unit, based on a predetermined value received from a connected information processing device;
an instruction converting unit that converts a read request or a write request into an instruction of reading from or writing to a sector position of the recording unit based on the conversion rule generated by the conversion-rule generating unit, when a read request or a write request is received from the information processing device; and
a recording-unit control unit that reads data from or writes data to the recording unit by executing the instruction converted by the instruction converting unit.

2. The recording control device according to claim 1, further comprising a conversion-rule discarding unit that discards the conversion rule generated by the conversion-rule generating unit, after the recording-unit control unit reads data from or writes data to the recording unit

3. The recording control device according to claim 1, wherein when the recording-unit control unit reads data from the recording unit, the recording-unit control unit converts the converted sector position into a sector position assigned by the information processing device and then notifies the assigned sector position to the information processing device.

4. The recording control device according to claim 1, wherein when the instruction converting unit converts each request into each instruction, the instruction converting unit converts a content of data by performing an exclusive OR calculation with the predetermined value received by the conversion-rule generating unit.

5. The recording control device according to claim 1, wherein when the recording-unit control unit reads or writes data, the recording control unit rearranges an order of instructions converted by the instruction converting unit in an order from taking a shorter time to complete an execution and executes the instructions in the rearranged order.

6. A recording control method comprising:
a conversion-rule generating step of generating a rule of converting a sector position of data to be read from a recording unit or written into the recording unit, based on a predetermined value received from a connected information processing device;
an instruction converting step of converting a read request or a write request into an instruction of reading from or writing to a sector position of the recording unit based on the conversion rule generated at the conversion-rule generating step, when a read request or a write request is received from the information processing device; and
a recording-unit control step of reading data from or writing data to the recording unit by executing the instruction converted at the instruction converting step.

7. A recording control program causing a computer to execute:
a conversion-rule generating step of generating a rule of converting a sector position of data to be read from a recording unit or written into the recording unit, based on a predetermined value received from a connected information processing device;
an instruction converting step of converting a read request or a write request into an instruction of reading from or writing to a sector position of the recording unit based on the conversion rule generated at the conversion-rule generating step, when a read request or a write request is received from the information processing device; and
a recording-unit control step of reading data from or writing data to the recording unit by executing the instruction converted at the instruction converting step.
